# DEMANDE DE BREVET EUROPEEN

(11) **EP 1 825 944 A1**
(43) Date de publication de la demande: **29.08.2007**
(21) Numéro de dépôt: 07356030.2
(22) Date de dépôt: 23.02.2007
(51) Int. Cl.: B23B 31/12

(54) **Mandrin porte-outil pour l'équipement d'une machine tournante, muni de moyens de verrouillage radial et axial séquencés**

(30) Priorité: 27.02.2006 FR 0601697
(71) Demandeur: Etablissements Amyot, 25300 Pontarlier (FR)
(72) Inventeur: Cachod, Yves, 25270 Levier (FR)
(74) Mandataire: Delorme, Nicolas

(57) **Abrégé**

Dans le corps (2) du mandrin (1) coulissent des mors (7) dont le filetage extérieur est en prise avec le filetage intérieur d'un écrou monté rotatif sur le corps. L'écrou est entraîné en rotation par une chemise permettant le déplacement des mors.

Le mandrin comprend également des moyens de verrouillage radial (36) actionnables par une rotation de la chemise pour provoquer le blocage en rotation de l'écrou par rapport au corps, et des moyens de verrouillage axial (47) actionnables par un déplacement axial de la chemise et permettant d'empêcher l'actionnement des moyens de verrouillage radial.

Des moyens de séquencement (21, 34) sont agencés pour empêcher le passage des moyens de verrouillage axial en position verrouillée tant que les moyens de verrouillage radial ne sont pas en position verrouillée.

## Description

La présente invention concerne un mandrin porte-outil pour l'équipement d'une machine tournante, notamment une perceuse.

De façon classique, un mandrin comporte un corps présentant un axe et comportant une partie arrière destinée à être fixée sur un arbre moteur de la machine et une partie avant dans laquelle sont ménagés des logements convergeant vers l'avant, des mors montés coulissants chacun dans un logement du corps et présentant un filetage extérieur, un écrou monté rotatif sur le corps et possédant un filetage intérieur en prise avec le filetage extérieur des mors, et une chemise possédant une paroi intérieure qui coopère avec l'écrou pour l'entraîner en rotation par rapport au corps et ainsi déplacer les mors entre une position de serrage de l'outil et une position desserrée.

Les mandrins de ce type ont pour avantage de permettre le serrage d'un outil sans nécessiter la mise en oeuvre d'une clé, tout en évitant l'ouverture intempestive du mandrin durant des travaux de percussion notamment.

II est connu de prévoir sur de tels mandrins des moyens de verrouillage radial et/ou axial.

Les moyens de verrouillage radial permettent d'empêcher la rotation de l'écrou par rapport au corps lorsque les mors sont en position de serrage. Ils peuvent être actionnés de façon automatique et transparente pour l'opérateur au cours des phases de serrage et de desserrage du mandrin, par exemple en utilisant le même mouvement de rotation de la chemise autour du corps qui permet le serrage et le desserrage du mandrin.

Les moyens de verrouillage axial visent quant à eux, lorsqu'ils sont en position verrouillée, à empêcher que les moyens de verrouillage radial ne se déverrouillent. Après avoir verrouillé radialement le mandrin, l'opérateur doit déplacer la chemise dans le sens axial en général de l'avant vers l'arrière du mandrin, pour obtenir le verrouillage. De la même façon, à l'ouverture du mandrin, l'opérateur doit d'abord déplacer la chemise dans le sens axial en général de l'arrière vers l'avant du mandrin, pour déverrouiller ce dernier avant de pouvoir desserrer radialement le mandrin.

Afin d'offrir un verrouillage total, des mandrins peuvent être équipés de deux systèmes de verrouillage combinés, radial et axial.

Or, il apparaît clairement que ces deux systèmes de verrouillage doivent être mis en oeuvre dans un ordre déterminé, afin que chacun d'entre eux puisse jouer parfaitement son rôle. Le principe même de ces systèmes impose que le système de verrouillage radial soit d'abord enclenché et que le système de verrouillage axial soit enclenché dans un deuxième temps.

En effet, si le système de verrouillage axial est enclenché le premier, le système de verrouillage radial ne pourra pas être enclenché puisque la chemise sera alors bloquée en rotation par rapport au corps. De plus, si le système de verrouillage axial est enclenché le premier, cela peut entraîner une détérioration du système de verrouillage axial puisque l'opérateur cherchera à faire tourner la chemise pour enclencher le verrouillage radial alors que celle-ci sera déjà immobilisée en rotation.

Un actionnement en premier du système de verrouillage axial peut également s'avérer dangereux pour l'opérateur. En effet, lorsque l'opérateur manoeuvre le mandrin à l'aide de la perceuse, sur les perceuses sans fil en particulier, si le système de verrouillage axial s'enclenche le premier, la chemise sera automatiquement, et de façon brusque, bloquée en rotation par rapport au corps du mandrin. Ainsi, l'opérateur risque de s'endommager la main.

La présente invention vise à remédier aux inconvénients mentionnés ci-dessus, en fournissant un mandrin muni de moyens de verrouillage axial et radial améliorant l'efficacité du verrouillage et assurant la sécurité de l'opérateur.

A cet effet, l'invention concerne un mandrin du type précité, comprenant également :
- des moyens de verrouillage radial actionnables par une rotation de la chemise pour provoquer, lorsqu'ils sont en position verrouillée, le blocage en rotation de l'écrou par rapport au corps quand les mors sont en position de serrage ;
- et des moyens de verrouillage axial actionnables par un déplacement axial de la chemise et destinés, lorsqu'ils sont en position verrouillée, à empêcher l'actionnement des moyens de verrouillage radial.

Selon une définition générale de l'invention, le mandrin comporte en outre des moyens de séquencement agencés pour empêcher le passage des moyens de verrouillage axial en position verrouillée tant que les moyens de verrouillage radial ne sont pas en position verrouillée.

Ainsi, le système de verrouillage axial ne pourra être enclenché que si le système de verrouillage radial est déjà enclenché, et les inconvénients de l'art antérieur sont évités.

Selon une réalisation possible, la chemise possède un mouvement relatif angulaire par rapport à l'écrou entre une position déverrouillée dans laquelle la chemise peut entraîner l'écrou en rotation et une position verrouillée dans laquelle les mors sont en position de serrage et l'écrou est bloqué en rotation par rapport au corps, et les moyens de séquencement comprennent au moins un organe de butée solidaire de l'écrou qui, lorsque la chemise est en position déverrouillée, est disposé de sorte à empêcher le déplacement axial de la chemise et qui, lorsque la chemise est en position verrouillée, est disposé de sorte à autoriser le déplacement axial de la chemise.

L'opérateur est ainsi obligé de faire tourner la chemise vers sa position verrouillée, réalisant donc dans un premier temps le verrouillage radial, avant de pouvoir déplacer la chemise axialement pour réaliser le verrouillage axial du mandrin.

Par exemple, les moyens de verrouillage radial comprennent au moins une lame ressort montée fixe angulairement sur l'écrou et possédant une extrémité libre qui fait saillie au travers d'un évidement ménagé dans l'écrou et qui, en position verrouillée des moyens de verrouillage radial, coopère avec une zone cannelée périphérique ménagée sur le corps.

La lame ressort peut être solidaire d'un anneau monté fixe sur l'écrou, ledit anneau comportant au moins deux pattes engagées dans des crans périphériques ménagés dans l'écrou qui permettent d'immobiliser l'anneau en rotation par rapport à l'écrou.

Avantageusement, l'organe de butée peut être constitué par l'extrémité libre d'au moins une patte, faisant saillie de l'écrou sensiblement radialement vers l'extérieur.

Selon une réalisation possible, les moyens de verrouillage axial comprennent une denture ménagée sur la face intérieure de la chemise et une denture ménagée sur la face extérieure du corps, les dentures étant disjointes dans une première position axiale de la chemise et en prise dans une deuxième position axiale de la chemise.

Le mandrin peut en outre comprendre :
- un insert monté fixe à l'intérieur de la chemise et comportant au moins une dent axiale ;
- un entraîneur possédant au moins une encoche recevant la dent axiale de l'insert, de sorte que l'entraîneur puisse être entraîné en rotation par l'insert et présenter un degré de liberté en translation axiale par rapport à l'insert, l'entraîneur possédant un mouvement relatif angulaire par rapport à l'écrou entre une position déverrouillée dans laquelle l'entraîneur peut entraîner l'écrou en rotation et une position verrouillée dans laquelle les mors sont en position de serrage et l'écrou est bloqué en rotation par rapport au corps.

Par exemple, l'entraîneur comporte une lumière ouverte axialement et radialement, ménagée au fond de son encoche, dans laquelle est logée l'organe de butée et dans laquelle peut être inséré un tenon prolongeant axialement la dent de l'insert lorsque la chemise est en position verrouillée.

Dans une réalisation possible, la denture intérieure est ménagée sur la face intérieure de l'insert.

Le mandrin peut en outre comporter un crabot monté fixe sur le corps, et sur lequel est ménagée la denture extérieure.

On décrit à présent, à titre d'exemple non limitatif, un mode de réalisation possible de l'invention, en référence aux figures annexées :
La figure 1 est une vue en perspective éclatée d'un mandrin selon l'invention ;
Les figures 2, 3 et 4 sont des vues en perspective respectivement du corps, du crabot et du moyen de verrouillage axial du mandrin de la figure 1 ;
La figure 5 est une vue en coupe longitudinale du mandrin en position déverrouillée ;
La figure 6 est une vue latérale du mandrin en position déverrouillée ;
La figure 7 est une vue en coupe du mandrin selon la ligne AA de la figure 6 ;
La figure 8 est une vue en perspective agrandie d'un détail de la figure 6, montrant l'organe de butée empêchant le déplacement axial de la chemise ;
La figure 9 est une vue en coupe longitudinale du mandrin en position verrouillée ;
La figure 10 est une vue latérale du mandrin en position verrouillée ; et
La figure 11 est une vue en coupe du mandrin selon la ligne BB de la figure 10.

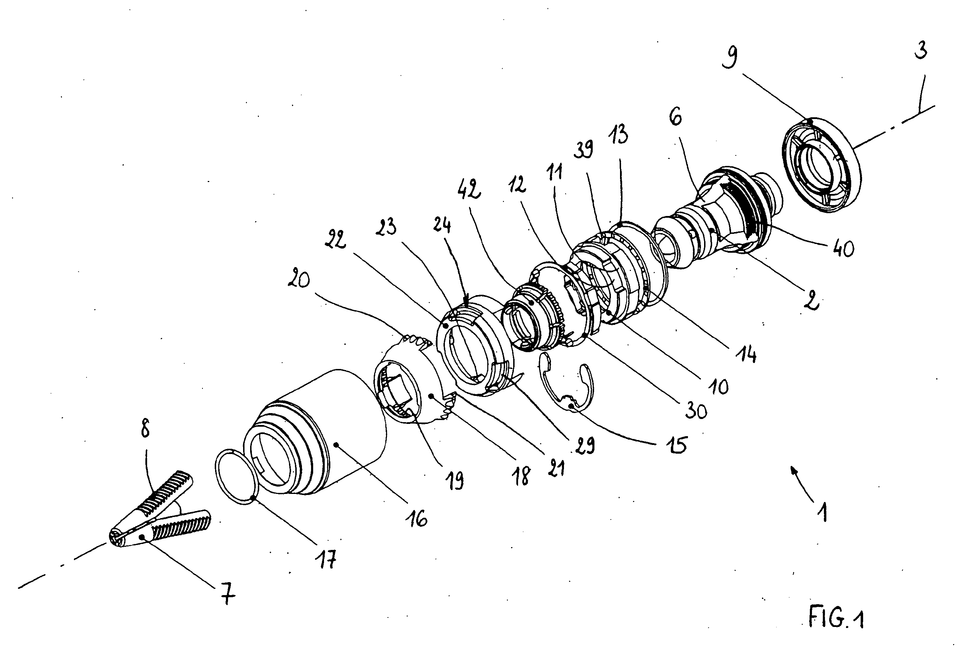

On se rapporte tout d'abord aux figures 1 à 4.

Le mandrin 1 comprend un corps 2, de forme générale cylindrique et d'axe 3. La partie arrière 4 du corps 2 comprend un orifice destiné à permettre l'introduction d'une broche d'une machine tournante telle qu'une perceuse. La partie avant du corps 2 comprend un alésage 5 longitudinal dans lequel est destiné à être introduit un outil tel qu'un foret, ainsi que trois logements 6 convergeant vers l'avant, recevant chacun un mors 7 et permettant son guidage en translation. Les mors 7 présentent un filetage extérieur 8.

Le mandrin 1 comprend également une bague arrière 9, sensiblement cylindrique, engagée autour de la partie arrière 4 du corps 2 de façon sensiblement coaxiale, et rendue solidaire de celle-ci par tout moyen approprié.

Un écrou 10 est engagé autour des mors 7, sensiblement coaxialement au corps 2. L'écrou 10 présente un filetage intérieur coopérant avec le filetage extérieur 8 des mors 7, pour permettre le déplacement des mors 7 vers la position de serrage ou desserrée suivant le sens d'entraînement en rotation de l'écrou 10. L'écrou 10 est formé d'un tronçon cylindrique avant et d'un tronçon cylindrique arrière qui sont tous les deux de même diamètre intérieur, le diamètre extérieur du tronçon arrière étant supérieur au diamètre extérieur du tronçon avant. La jonction entre les tronçons avant et arrière définit une surface transversale 11 orthogonale à l'axe 3 du corps 2. Le tronçon avant de l'écrou 10 comprend trois crans 12 sensiblement radiaux et équirépartis à sa périphérie.

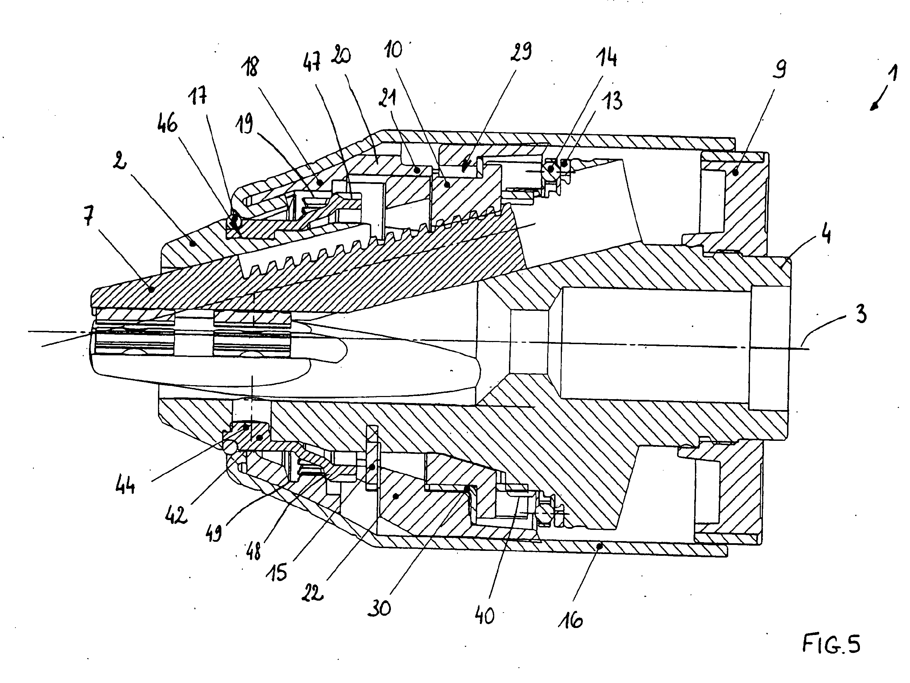

L'écrou 10 est monté en butée arrière contre une paroi transversale du corps 2 (voir figure 5), avec interposition d'une rondelle en acier 13 et d'une cage à billes 14 afin de faciliter la rotation de l'écrou 10 par rapport au corps 2. En outre, un circlips 15 bloque l'écrou 10 en translation vers l'avant.

Le mandrin 1 comprend également une chemise 16 globalement cylindrique et s'étendant sensiblement sur toute la longueur du corps 2. La chemise 16 est montée sur le corps 2 de façon rotative autour de l'axe 3, avec une possibilité de translation d'amplitude limitée le long de l'axe 3. Ce mouvement est limité vers l'avant par un jonc 17, et vers l'arrière par différents moyens qui seront décrits plus loin. La paroi intérieure de la chemise 16, ainsi que les différentes pièces qui lui sont associées, coopèrent avec l'écrou 10 pour permettre l'entraînement en rotation dudit écrou 10 et donc le déplacement vers l'avant ou vers l'arrière des mors 7 en vue du serrage ou du desserrage de l'outil.

Un insert 18 est disposé en partie avant à l'intérieur de la chemise 16, de façon fixe par rapport à celle-ci. Dans le cas d'un mandrin 1 à habillage métallique, l'insert 18 est monté de façon fixe dans la chemise 16. Dans le cas d'un mandrin 1 à habillage plastique, l'insert 18 fait partie intégrante de la chemise 16. En même temps que la chemise 16, l'insert 18 peut donc tourner par rapport au corps 2 autour de l'axe 3, et se déplacer en translation de long de l'axe 3 avec une amplitude limitée.

L'insert 18 présente une partie avant globalement tronconique dont l'extrémité avant est engagée dans un repli de la chemise 16 et dont la face intérieure comprend une denture intérieure 19 sensiblement circulaire. L'insert 18 comporte également en prolongement de la partie avant trois dents 20 s'étendant axialement vers l'arrière, équiréparties à la périphérie de l'insert 18. Chaque dent 20 présente une forme sensiblement rectangulaire en vue latérale et est prolongée par un tenon 21 d'épaisseur radiale plus faible que la dent 20 elle-même. Les tenons 21 présentent sensiblement le même diamètre intérieur que les dents 20.

Un entraîneur 22 est monté sur le corps 2, à l'intérieur de la chemise 16, globalement entre l'écrou 10 et l'insert 18, en étant bloqué en translation par rapport au corps 2 vers l'avant par le circlips 15 et vers l'arrière par l'écrou 10 en butée contre la paroi transversale du corps 2. L'insert 18 est donc mobile en translation le long de l'axe 3 par rapport à l'entraîneur 22.

L'entraîneur 22 présente la forme générale d'un cylindre. Sur la face intérieure du cylindre sont prévus trois doigts 23 engagés chacun dans un cran 12 de l'écrou 10 (voir figure 7). En outre, à la périphérie du cylindre sont ménagées trois encoches 24 sensiblement équiréparties, qui débouchent à l'avant et radialement vers l'extérieur. Chaque encoche 24 est destinée à recevoir une dent 20 de l'insert 18, de sorte que la rotation de l'insert 18 autour de l'axe 3, provoquée par un opérateur actionnant le chemise 16, entraîne la rotation de l'entraîneur 22.

Chaque encoche 24 est limitée par une face cylindrique 25, deux faces latérales 26, 27 orientées axialement, et un fond 28 transversal à l'axe 3. Il est à noter que la distance entre les faces latérales 26, 27 d'une encoche 24 est supérieure à la largeur d'une dent 20. Ainsi, lorsqu'une dent 20 est en contact avec l'une 26 des faces latérales de l'entraîneur 22, il existe un espace entre cette dent 20 et l'autre 27 des faces latérales (voir figure 6).

Sensiblement à la jonction entre la face cylindrique 25 et le fond 28 d'une encoche 24 est ménagée une lumière 29, ouverte axialement et radialement, dont la dimension radiale est sensiblement identique à l'épaisseur radiale du tenon 21 prolongeant chaque dent 20 de l'insert 18. Chaque lumière 29 est ainsi destinée à recevoir un tenon 21, comme on le verra plus loin.

Des moyens de verrouillage radial 30 sont montés sur l'écrou 10, en étant interposés entre l'écrou 10 et l'entraîneur 22.

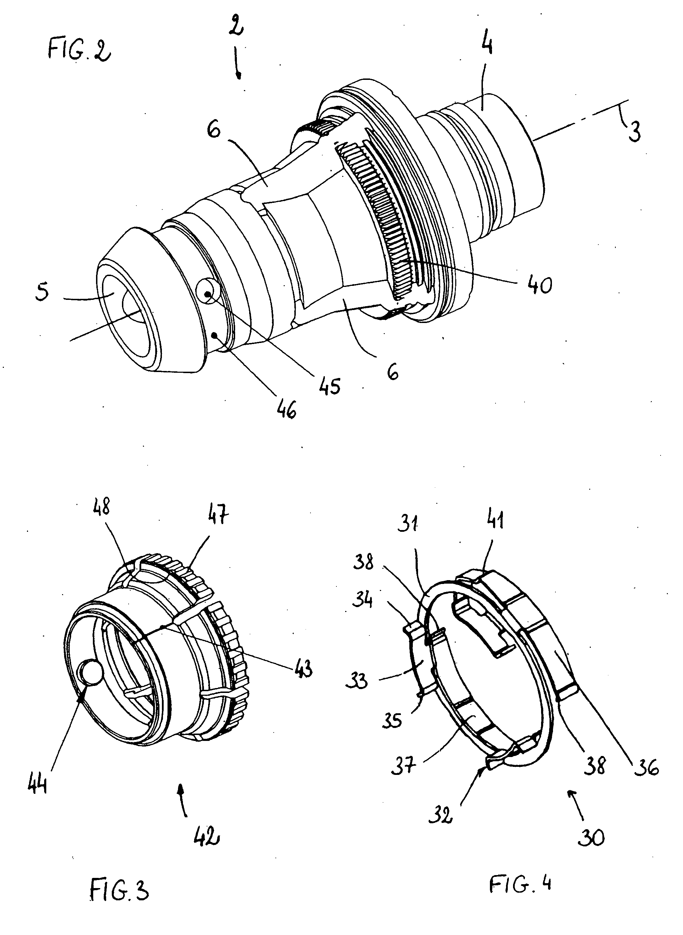

Comme illustré sur la figure 4, les moyens de verrouillage radial 30 comprennent un anneau 31 monté solidaire en rotation sur l'écrou 10, par exemple contre la surface transversale 11 de celui-ci. L'anneau 31 comprend trois pattes 32 s'étendant radialement vers l'intérieur de l'anneau 31 et à l'avant de celui-ci. Les pattes 32 sont engagées chacune dans un cran 12 de l'écrou 10, afin de permettre l'immobilisation en rotation de l'anneau 31 par rapport à l'écrou 10, les pattes 32 présentant une forme épousant la forme des crans 12 de l'écrou 10. Ainsi, chaque patte 32 possède une base 33 en portion de cylindre qui s'étend sensiblement transversalement par rapport au plan de l'anneau 31 ainsi que deux replis 34, 35 s'étendant depuis la base 33 en direction de l'extérieur de l'anneau 31. Les replis 34, 35 coopèrent avec les faces latérales des crans 32 et dépassent au-delà de la surface extérieure cylindrique de l'écrou 10 (figure 7). En position montée, l'un au moins des replis 34 de chaque patte 32 fait saillie radialement au travers d'une lumière 29 ménagée dans l'encoche 24 de l'entraîneur 22.

Les doigts 23 de l'entraîneur 22 sont donc engagés dans les crans 12 de l'écrou 10 au fond desquels sont disposées les pattes 32 des moyens de verrouillage radial 30.

L'anneau 31 comprend également une première et une deuxième lames ressort 36, 37 en forme d'arc de cercle centré sur l'axe 3. Les deux lames ressort 36, 37 s'étendent à l'opposé l'une de l'autre, vers l'arrière de l'anneau 31, au-dessus du tronçon arrière de l'écrou 10. L'extrémité libre 38 de chaque lame ressort 36, 37 est recourbée en direction de l'axe 3 en faisant saillie au travers d'un évidement 39 traversant ménagé dans l'écrou 10 pour atteindre, en position serrée du mandrin 1, une zone cannelée 40 prévue sur le corps 2. La première lame ressort 36 comporte en outre un relief 41 tourné vers l'extérieur du mandrin 1 pour coopérer respectivement dans les positions verrouillées et déverrouillées de la chemise 16 avec une première et une deuxième dépressions ménagées dans la paroi intérieure de l'entraîneur 22. Par ailleurs, l'entraîneur 22 comporte, dans sa paroi intérieure, deux parties évidées se terminant par une rampe et dans laquelle l'extrémité libre 38 d'une lame ressort est logée, dans la position déverrouillée de la chemise 16.

Enfin, le mandrin 1 comporte un crabot 42 monté fixe sur le corps 2, à l'avant de celui-ci.

Comme illustré sur la figure 3, le crabot 42 présente sensiblement la forme d'un cylindre pourvu d'une fente axiale 43 s'étendant sur toute sa longueur, lui permettant d'être déformé radialement de façon élastique pour son montage sur le corps 2. Le crabot 42 présente en outre au moins un ergot 44 destiné à être engagé dans un trou 45 correspondant ménagé sur le corps 2. L'ergot est ici cylindrique, radial et dirigé vers l'axe 3 et permet notamment le blocage en rotation du crabot 42 sur le corps 2. Avantageusement, le trou 45 est percé radialement dans une gorge périphérique 46 du corps, cette gorge 46 permettant un très bon maintien en position axiale du crabot 42 par rapport au corps 2. Le maintien en position du crabot 42 sur le corps 2 est assuré par la chemise 16 qui coiffe le crabot 42 et qui empêche la déformation radiale de ce dernier. Ainsi, le crabot 42 est totalement immobilisé sur le corps 2. Le crabot 42 comporte en outre une denture extérieure 47 qui est située, lorsque la chemise 16 est en butée sur le jonc avant 17, en arrière de la denture intérieure 19 de l'insert 18 (figure 3), et au droit de la denture intérieure 19 lorsque la chemise 16 est en butée arrière. Les dentures 19, 47 appartiennent aux moyens de verrouillage axial du mandrin 1.

Le fonctionnement du mandrin 1 est le suivant.

Initialement, lorsque les mors 7 sont en position desserrée, la chemise 16 est en position avancée (en butée contre le jonc avant 17). La denture intérieure 19 de l'insert 18 est donc disjointe de la denture extérieure 47 du crabot 42, à l'avant de celle-ci. Les dents 20 de l'insert 18 sont engagées dans les encoches 24 de l'entraîneur, mais les tenons 21 ne sont pas insérés dans les lumières 29.

Un bourrelet annulaire 48 ménagé sur le crabot 42 juste en avant de la denture extérieure 47 coopère avec la face arrière inclinée de la denture intérieure 19 de l'insert 18. De ce fait, la chemise 16 est maintenue en position avant.

Pour le serrage du mandrin 1, un opérateur tourne la chemise 16 par rapport au corps 2 et, donc également l'insert 18 solidaire de la chemise 16. Par coopération entre les dents 20 de l'insert 18 et les encoches 24 de l'entraîneur 22, l'entraîneur 22 est également mis en rotation. De ce fait, puisque le relief 41 de la première lame ressort 36 est engagé dans la première dépression ménagée dans la paroi intérieure de l'entraîneur 22, les moyens de verrouillage radial 30, et donc l'écrou 10 auquel ils sont fixés, sont mis en rotation. Les mors 7 sont donc déplacés vers l'avant et rapprochés de l'axe 3. Lors de ce mouvement, les doigts 23 de la face intérieure de l'entraîneur 22 sont au contact d'une première paroi latérale du cran 12 de l'écrou 10 (figure 7). De plus, le positionnement relatif des différentes pièces est prévu pour que l'un des replis 34 de chaque patte 32 des moyens de verrouillage radial 30 passe à travers la lumière 29 correspondante.

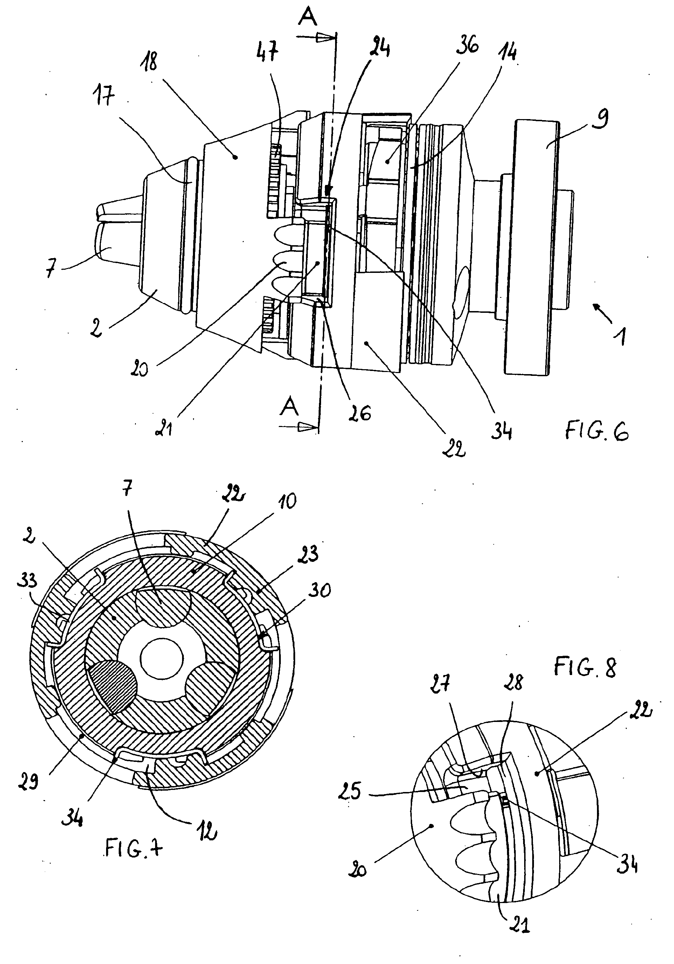

La position des différentes pièces constitutives du mandrin 1 une fois que les mors 7 sont en position de serrage de l'outil est illustrée sur les figures 5 à 8.

Les moyens de verrouillage axial et radial sont en position déverrouillée puisque :
- le repli 34 de la patte 32 des moyens de verrouillage radial 30 empêche le déplacement vers l'arrière de l'insert 18 par rapport à l'entraîneur 22, et donc la coopération entre les dentures intérieure 19 et extérieure 47 ;
- les lames ressort 36, 37 ne sont pas sollicitées vers la zone cannelée 40 du corps 2 car elles sont logées dans les parties évidées ménagées dans la paroi intérieure de l'entraîneur 22.

A partir de cette position, la poursuite du mouvement de rotation de la chemise 16 provoque la rotation relative de l'entraîneur 22 par rapport à l'écrou 10, les doigts 23 de la face intérieure de l'entraîneur 22 se déplaçant pour venir au contact de la deuxième paroi latérale du cran 12 de l'écrou 10 (figure 11).

La chemise 16 et l'entraîneur 22 sont alors en position de verrouillage. Le relief 41 de la première lame ressort 36 coopère avec la deuxième dépression ménagée dans la paroi intérieure de l'entraîneur 22, et les lames ressort 36, 37, n'étant plus logées dans les parties évidées ménagées dans la paroi intérieure de l'entraîneur 22, sont sollicitées vers l'axe 3. De ce fait, elles coopèrent avec la zone cannelée 40 du corps 2, et assurent donc le blocage en rotation de l'écrou 10 par rapport au corps 2. L'entraîneur 22 a donc permis d'enclencher les moyens de verrouillage axial.

En outre, du fait du déplacement en rotation de l'entraîneur 22 par rapport à l'écrou 10, le repli 34 de chaque patte 32 des moyens de verrouillage radial 30 s'est déplacé par rapport à la lumière 29, pour venir se loger à proximité de la face latérale 27 de l'encoche 24, libérant ainsi le passage axial de la lumière 29 correspondante.

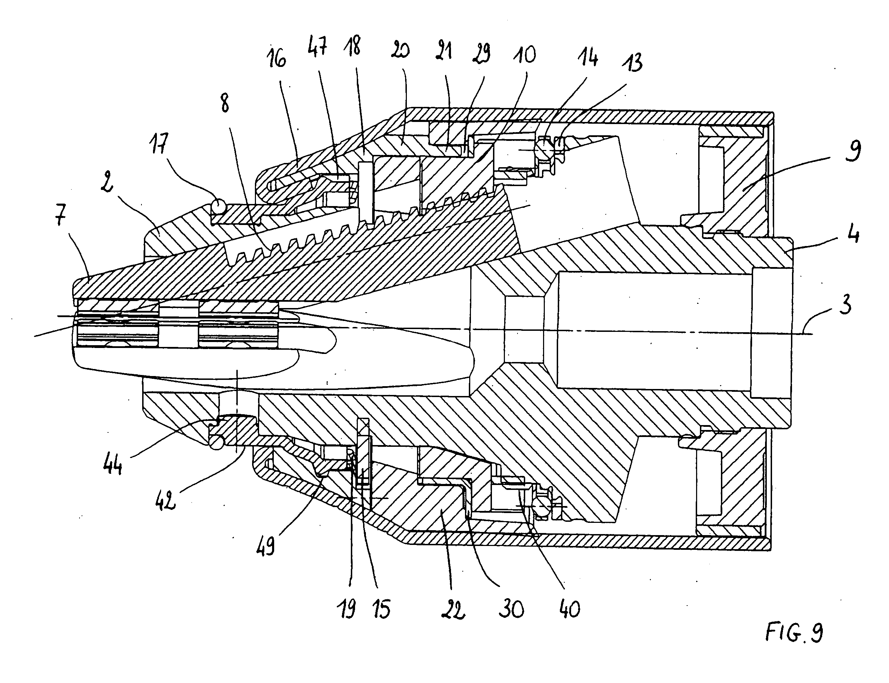

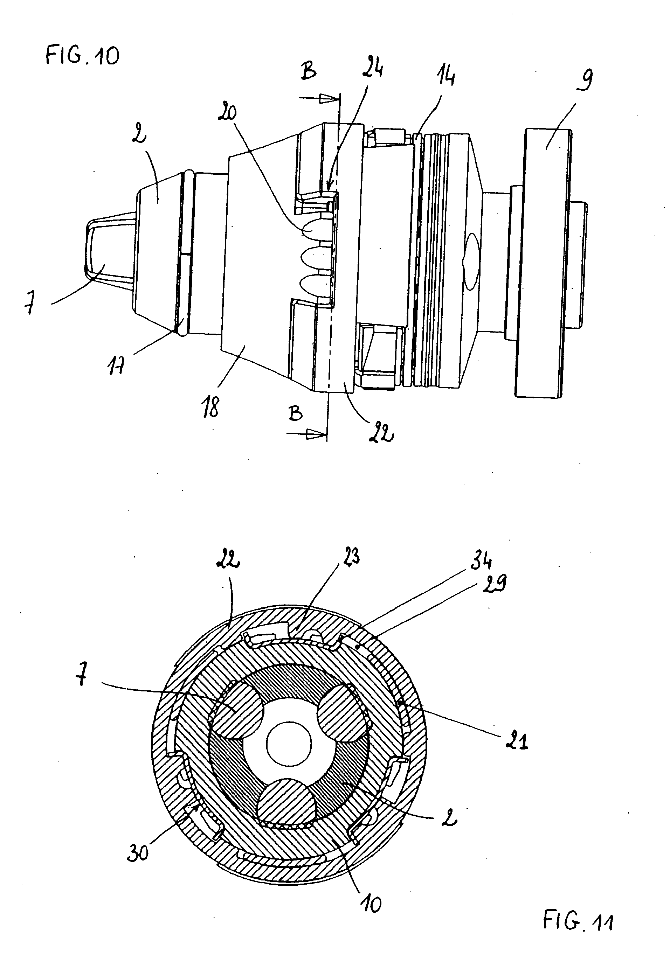

L'opérateur peut donc déplacer l'ensemble chemise 16 et insert 18 le long de l'axe 3, par rapport au corps 2 et vers l'arrière, en forçant légèrement pour que la denture 19 de l'insert 18 puisse dépasser le bourrelet annulaire 48. Les tenons 21 prolongeant les dents 20 de l'insert 18 s'engagent alors dans les lumières 29, et la denture intérieure 19 de l'insert 18 vient en prise avec la denture extérieure 47 du crabot 42 (figures 9 à 11). Les moyens de verrouillage axial sont alors en position verrouillée : dans cette position, ils empêchent la rotation de la chemise 16 par rapport au corps 2, donc le déverrouillage du mandrin 1.

La limitation vers l'arrière du mouvement de translation de la chemise 16 est assurée par la venue en butée de la face transversale formée entre le doigt 20 et le tenon 21 de l'insert 18 contre le fond 28 de l'encoche 24 de l'entraîneur 22. Le blocage de la chemise 16 en position arrière peut être obtenu par l'encliquetage d'un élément de la chemise 16 ou de l'insert 18 dans une gorge solidaire du corps 2, ce qui produit en outre un bruit caractéristique repérable par l'opérateur. Par exemple, l'insert 18 comporte une gorge 49 de forme adaptée à celle du bourrelet annulaire 48 ménagé sur le crabot 42, ici de forme sensiblement trapézoïdale, dans laquelle vient se loger ledit bourrelet annulaire 48 (voir figure 9).

Pour desserrer les mors 7, l'opérateur doit tout d'abord déverrouiller les moyens de verrouillage axial, en déplaçant la chemise 16 vers l'avant. L'opérateur peut alors faire tourner la chemise 16 dans le sens inverse autour de l'axe 3 pour placer les moyens de verrouillage radial en position déverrouillée, puis procéder au desserrage des mors 7.

Ainsi, l'invention apporte une amélioration déterminante à la technique antérieure, en fournissant un mandrin qui possède des moyens agissant comme un détrompeur, pour empêcher l'opérateur d'actionner en premier les moyens de verrouillage axial. Le verrouillage et la sécurité du mandrin s'en trouvent ainsi améliorés.

Il va de soi que l'invention n'est pas limitée au mode de réalisation décrit ci-dessus à titre d'exemple mais qu'elle en embrasse au contraire toutes les variantes de réalisation.

## Revendications

1. Mandrin porte-outil pour l'équipement d'une machine tournante, comprenant :
- un corps (2) présentant un axe (3) et comportant une partie arrière (4) destinée à être fixée sur un arbre moteur de la machine et une partie avant dans laquelle sont ménagés des logements (6) convergeant vers l'avant ;
- des mors (7) montés coulissants chacun dans un logement (6) du corps (2), et présentant un filetage extérieur (8) ;
- un écrou (10) monté rotatif sur le corps (2) et possédant un filetage intérieur en prise avec le filetage extérieur (8) des mors (7) ;
- une chemise (16) possédant une paroi intérieure qui coopère avec l'écrou (10) pour l'entraîner en rotation par rapport au corps (2) et ainsi déplacer les mors (7) entre une position de serrage de l'outil et une position desserrée ;
- des moyens de verrouillage radial (30, 38, 40) actionnables par une rotation de la chemise (16) pour provoquer, lorsqu'ils sont en position verrouillée, le blocage en rotation de l'écrou (10) par rapport au corps (2) quand les mors (7) sont en position de serrage ;
- des moyens de verrouillage axial (19, 47) actionnables par un déplacement axial de la chemise (16) et destinés, lorsqu'ils sont en position verrouillée, à empêcher l'actionnement des moyens de verrouillage radial ;
**caractérisé en ce qu'**il comprend en outre des moyens de séquencement (29, 34) agencés pour empêcher le passage des moyens de verrouillage axial en position verrouillée tant que les moyens de verrouillage radial ne sont pas en position verrouillée.

2. Mandrin selon la revendication 1, **caractérisé en ce que** la chemise (16) possède un mouvement relatif angulaire par rapport à l'écrou (10) entre une position déverrouillée dans laquelle la chemise (16) peut entraîner l'écrou (10) en rotation et une position verrouillée dans laquelle les mors (7) sont en position de serrage et l'écrou (10) est bloqué en rotation par rapport au corps (2), et **en ce que** les moyens de séquencement comprennent au moins un organe de butée (34) solidaire de l'écrou (10) qui, lorsque la chemise (16) est en position déverrouillée, est disposé de sorte à empêcher le déplacement axial de la chemise (16) et qui, lorsque la chemise (16) est en position verrouillée, est disposé de sorte à autoriser le déplacement axial de la chemise (16).

3. Mandrin selon la revendication 1 ou 2, **caractérisé en ce que** les moyens de verrouillage radial comprennent au moins une lame ressort (36, 37) montée fixe angulairement sur l'écrou (10) et possédant une extrémité libre (38) qui fait saillie au travers d'un évidement (39) ménagé dans l'écrou (10) et qui, en position verrouillée des moyens de verrouillage radial, coopère avec une zone cannelée (40) périphérique ménagée sur le corps (2).

4. Mandrin selon la revendication 3, **caractérisé en ce que** la lame ressort (36, 37) est solidaire d'un anneau (31) monté fixe sur l'écrou (10), ledit anneau (31) comportant au moins deux pattes (32) engagées dans des crans (12) périphériques ménagés dans l'écrou (10) qui permettent d'immobiliser l'anneau (31) en rotation par rapport à l'écrou (10).

5. Mandrin selon les revendications 2 et 4, **caractérisé en ce que** l'organe de butée est constitué par l'extrémité libre (34) d'au moins une patte (32), faisant saillie de l'écrou (10) sensiblement radialement vers l'extérieur.

6. Mandrin selon l'une des revendications 1 à 5, **caractérisé en ce que** les moyens de verrouillage axial comprennent une denture (19) ménagée sur la face intérieure de la chemise (16) et une denture (47) ménagée sur la face extérieure du corps (2), les dentures étant disjointes dans une première position axiale de la chemise (16) et en prise dans une deuxième position axiale de la chemise (16).

7. Mandrin selon l'une des revendications 1 à 6, **caractérisé en ce qu'**il comprend :
- un insert (18) monté fixe à l'intérieur de la chemise (16) et comportant au moins une dent axiale (20) ;
- un entraîneur (22) possédant au moins une encoche (24) recevant la dent axiale (20) de l'insert (18), de sorte que l'entraîneur puisse être entraîné en rotation par l'insert (18) et présenter un degré de liberté en translation axiale par rapport à l'insert (18), l'entraîneur (22) possédant un mouvement relatif angulaire par rapport à l'écrou (10) entre une position déverrouillée dans laquelle l'entraîneur peut entraîner l'écrou (10) en rotation et une position verrouillée dans laquelle les mors (7) sont en position de serrage et l'écrou (10) est bloqué en rotation par rapport au corps (2).

8. Mandrin selon la revendication 7, lorsqu'elle dépend de la revendication 2, **caractérisé en ce que** l'entraîneur (22) comporte une lumière (29) ouverte axialement et radialement, ménagée au fond de son encoche (24), dans laquelle est logée l'organe de butée (34) et dans laquelle peut être inséré un tenon (21) prolongeant axialement la dent (20) de l'insert (18) lorsque la chemise (16) est en position verrouillée.

9. Mandrin selon la revendication 6 et la revendication 7 ou 8, **caractérisé en ce que** la denture intérieure (19) est ménagée sur la face intérieure de l'insert (18).

10. Mandrin selon l'une des revendications 6 à 9, **caractérisé en ce qu'**il comprend un crabot (42) monté fixe sur le corps (2), et sur lequel est ménagée la denture extérieure (47).

11. Mandrin selon la revendication 10, **caractérisé en ce que** le crabot (42) présente sensiblement la forme d'un cylindre pourvu d'une fente axiale (43) s'étendant sur toute sa longueur lui permettant d'être déformé radialement de façon élastique pour son montage sur le corps (2), le crabot présentant en outre au moins un ergot (44) destiné à être engagé dans un trou (45) correspondant ménagé sur le corps (2).
